Europäisches Patentamt

European Patent Office

Office européen des brevets

(19)

(11) Publication number: **0 043 045**

**A1**

(12) # EUROPEAN PATENT APPLICATION

(21) Application number: **81104715.8**

(22) Date of filing: **19.06.81**

(51) Int. Cl.³: **H 02 H 3/17**

(30) Priority: **26.06.80 IT 2303880**

(43) Date of publication of application:
**06.01.82 Bulletin 82/1**

(84) Designated Contracting States:
**AT BE CH DE FR GB LI LU NL SE**

(71) Applicant: **A.E. S.r.l.**
**Piazza Zaninelli, 6**
**I-20075 Lodi (Milan)(IT)**

(72) Inventor: **Gilardoni, Giovanni**
**Via Statale Bergamina, 23**
**I-20075 Lodi (Milan)(IT)**

(74) Representative: **Faggioni, Giovanmaria, Dr. et al,**
**Fumero-Studio Consulenza Brevetti**
**Widenmayerstrasse 5/IV**
**D-8000 München 22(DE)**

(54) **Improved life protection device.**

(57) The invention relates to a life protection device, against fulminations from electric discharges, apt to be associated to any electric apparatuses, comprising a switch of all the phases of the main feeding line, controlled by a respective control relay, and an electronic cutout circuit fed by a secondary line shunted from the main feeding line downstream of said switch and apt to cause the switching off of said control relay. Said electronic circuit is essentially formed by a pair of cascade transistors, the first of which is cut off in normal working conditions and starts to conduct when a signal, produced by a dispersion current or a short circuit current within the apparatus, is applied on its input.

FIG.1

EP 0 043 045 A1

"IMPROVED LIFE PROTECTION DEVICE"

=o✻o==o✻o=

The object of the present invention is a life protection device apt to prevent the risks of fulminations from electric discharges, which can be applied in association with electric apparatuses, both for domestic and industrial use, and which can also be applied directly to the sockets in which such apparatuses are plugged, or finally even to the power station supplying the plant.

A life protection device for electric apparatuses is already known from the European Patent application No. 79101592 of 23rd May 1979, said device being based on the use of a double screening of the apparatus and/or of the relative feeding cable, and of a secondary electronic cutout circuit with low-tension supply, which operates a cutoff switch of all the phases of the main feeding line, as well as of the secondary circuit, in the event of short circuit between the two phases of the screening.

The object of the present invention is to realize a life protection device, improved compared to that of the aforecited European Patent application, which makes it possible to energize the cutout circuit even when there is a flow of current between one of the phases of the main feeding circuit and one of the phases of the secondary electronic cutout circuit, or rather, between one of the phases of the main circuit and the earth, connected to the case of the electric apparatus.

Said result is obtained - in a life protection device of the type comprising a switch of all the phases of the main circuit, controlled by a respective control relay, and a secondary electronic cutout circuit with a low-tension supply shunted from the main circuit in a position downstream of said control relay and apt to cause the switching off of said relay - on account of the fact that a potential difference is created between one phase of the main circuit and a first phase of the secondary circuit, through their mutual connection by means of two resistances of high ohmic value, the current flowing through said resistances being used - in the event of short circuit between a phase of the main circuit and the second phase of the secondary circuit - to pilot the electronic cutout circuit and to cause the switching off of said control relay.

According to a preferred embodiment, the current flowing through said connecting resistances, which is determined by the low tension of the secondary circuit - for instance a 12 V d.c. - overlapped to the high tension of the main circuit - for instance a 220 V a.c. - determines in turn, through a rectifying circuit and a voltage divider, a tension signal which pilots said electronic cutout circuit to energize said control relay.

According to another embodiment, the current flowing through said connecting resistances is used to charge two corresponding capacitors, whose discharge current is apt to pilot the electronic cutout circuit so as to cause the switching off of the relay.

Further characteristics and advantages will anyhow result evident from the following description of some preferred embodiments, illustrated by way of example in the accompanying drawings, in which:

Fig. 1 shows the diagram of a first embodiment of the electronic cutout circuit used in the life protection device according to the invention;

Figs. 2 and 3 show two further circuit diagrams, according to two different embodiments.

As shown, said circuit comprises a general switch 1 operating on both phases A and B of the main feeding line; the diagram shows a two-phase line, for instance a 220 V a.c., but it could obviously also be a three-phase line, for instance a 380 V a.c.. The switch 1 is under the control of a control relay 2, which is operated by a secondary electronic cutout circuit.

This electronic circuit is low tension fed – for example with a 12 V d.c. – by a transformer 3 connected on the main line A–B, at a point downstream of the switch 1.

The electronic circuit comprises two stages of amplification, formed by the two transistors T1 and T2. As better explained hereinafter, when the apparatus is in working conditions, the switch 1 is switched on by the relay 2, this latter being energized due to the fact that the transistor T2 is in conduction, the transistor T1 being cut off.

In actual fact, the working is as follows: when the apparatus must be set working, the main feeding line is connected to a current source (not shown) and the switch 1 is switched on by acting on a manual push-button (not shown).

When switching on the switch 1, the feeding of the apparatus takes place immediately, as well as the feeding of the electronic cutout circuit through the transformer 3. The tension on the output of the transformer is rectified by the diode D1 and filtered by the capacitor C1. A "LED" indicated by L1 and fed through the resistance R1 signals the correct feeding of the cutout circuit.

In normal working conditions, no tension is present on the input S connected to the case, or to the mass., of the apparatus. In fact, the case of the apparatus is to be considered as perfectly insulated in respect of the two phases A, B, of the main feeding line. In such conditions the transistor T1, polarized to earth by the resistance R5 of very low value, results cut off. The 12 V tension is then present at the two ends of the resistance R8 and, through the resistances R10 and R7, said tension is carried to the input of the transistor T2, which gets saturated. When T2 leads, a current flows through the relay 2 – eventually limited by the resistance R9 in series – and the relay, energized, keeps the switch 1 on.

When there is an accidental deficiency of insulation, or even a shortcircuit between the case of the apparatus and the main feeding line, thanks to the presence of the connection resistances R2, R3, the 12 V d.c., overlapped to the a.c. of the main feeding line, is applied on the voltage divider formed by the resistances R4 and R5, and thus on the input S. The resistance R4 limits the value of the current which may flow, while the diode D2 has the function of rectifying the tension on the input S. The diode D3 protects the base of T1 from possible reverse voltage peaks present on the line.

Due to the flow of current through the resistances R4 and R5, a polarization voltage is present on the input S, or on the base of T1, which starts to conduct. When T1 leads, the voltage level applied on the base of T2 by the voltage divider formed by the resistances R8, R10 and R7, drops up to cutting off T2.

When T2 stops to lead, the relay 2 is de-energized and the switch 1 switches off.

It should be noted at once that the conduction of the transistor T1 depends - as can be easily understood - on the value of the insulation resistance of the apparatus, which is in series with the resistances R4 and R5. So, in the extreme conditions of perfect insulation and, respectively, of shortcircuit, the transistor T1 is surely cut off and, respectively, in conduction; while in the other conditions of merely defective insulation, it is possible to set the operation of the cutout circuit according to a selected value of the dispersion current. This setting may be done:

- by varying the value of the resistance R5, that is, by varying the input divider and the polarization of T1,

- or else by varying the resistance R10, that is, the polarization divider of T2.

The capacitor C2 has the function of shortcircuiting to earth the alternating current residues of the feeding line. Whereas the capacitor C3 has the function of somewhat delaying both the energizing and the de-energizing of the relay 2, in order to prevent false interventions or bounces of said relay.

In the aforedescribed circuit, the connection resistances may have a value of about 100 K$\Omega$ .

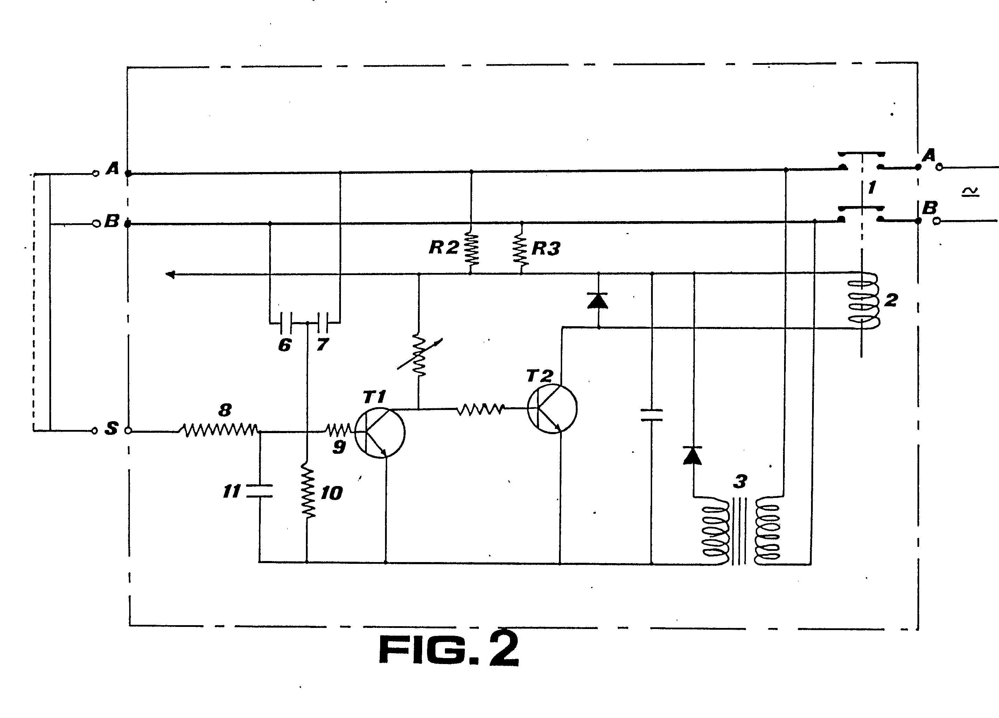

According to the different embodiment shown in figure 2, the connection resistances R2, R3, have a higher value - for instance of about 1 M$\Omega$ - so that the current flowing through them is very low, for example of 220 microamp. This current is normally of no account, as it is not apt to influence the working of the amplifying circuit.

This embodiment therefore provides for the use, in association with said connection resistances, of two capacitors 6 and 7, each for example of 0.1 $\mu$F, which get gradually charged - for instance, in a length of time of about 1 sec. or less - on account of said very low current.

When, due to a shortcircuit or even simply to a current dispersion between one of the two phases A or B and the phase S, the discharge of one of the capacitors 6 or 7 takes place, the current resulting therefrom - through the resistances 8, 9 and 10, which are for instance of 600 K$\Omega$ , of 5 K$\Omega$ and of 250 K$\Omega$ , respectively - is sufficient to cause, through the amplification circuit T1, T2, the switching off of the relay 2 and thereby the opening of the main feeding circuit.

A decoupling capacitor 11 - for instance of 0.1 $\mu$F - is preferably connected to the input of the amplification circuit, said capacitor performing the function of neutralizing the capacitive coupling of the transformer 3. Such capacitor 11 can be superfluous when the insulation in the air gap of the transformer is not capacitive.

It has been said above that the two resistances R2 and R3 preferably have a value of 1 M$\Omega$; this value should however be intended as purely indicative, since it is for instance possible to use resistances of even twice that value, namely of 2 M$\Omega$, when wishing to make the system more passive. It should however be noted that, to this increase of resistance there corresponds an increase in the charging time of the capacitors 6 and 7, for instance by over 10 sec.

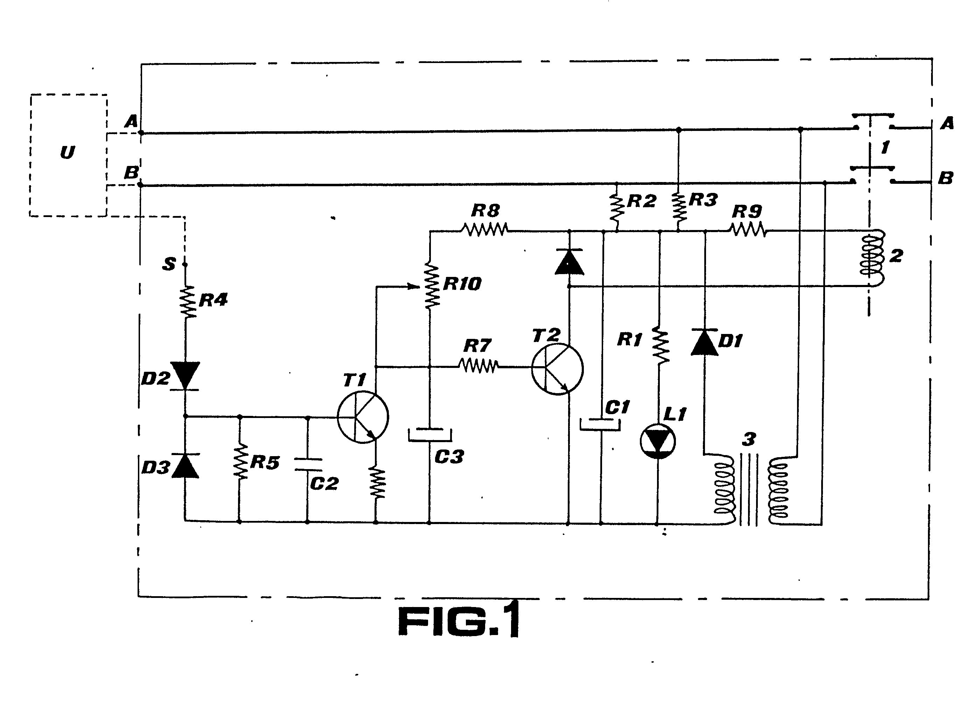

From the above, it appears evident that the device according to the invention can be used in all those cases in which the power line is not provided with the earth conductor. In this case, actually shown in figures 1 and 2, the mass of the apparatus is connected, as said, to the phase S of the secondary circuit: when the person using the apparatus touches its mass, for instance with wet hands, or somehow creates a possibility for current dispersion to earth — which determines a flow of current between the phase S and that of the phases A or B which is normally earthed — the device operates at once, switching off the switch 1.

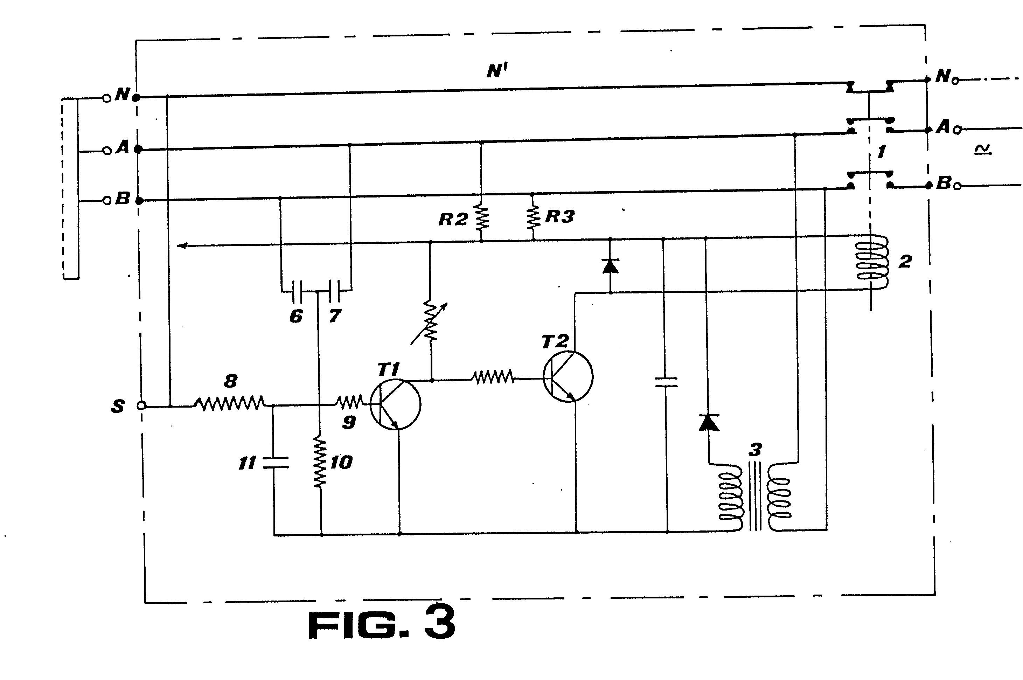

The embodiment of figure 3 takes instead into account the possibility of the general feeding system already comprising an earth conductor, indicated by a dashed line on the right of figure 3 and bearing the reference N.

In this case, also inside the box of the life protection device according to the invention there is provided a supplementary conductor N', which is furthermore connected to the phase S. In the latter case, however, in order to prevent the conductor N' from forming a continuous discharge line to earth of the electronic cutout circuit — with consequent constant switching off of the switch 1 — this switch comprises a supplementary contact, on the earth line N, which normally results switched on — contrary to what happens for the main contacts, on phases A and B — and is switched off only upon energizing of the electronic circuit and of the relay 2.

For the rest, the circuit of figure 3 is quite identical to that of figure 2. It is however evidently possible to adopt the same arrangement, with feeding line having an earth conductor N', also with a circuit as that of figure 1.

It is anyhow understood that the invention is not limited to the particular embodiments described hereabove, but that there may be other embodiments differing from the same, all within reach of a technician skilled in the art and all falling therefore within the protection scope of the present invention.

CLAIMS

1) Life protection device, against fulminations from electric discharges, apt to be associated to an electric apparatus and/or to its power source, of the type comprising a switch of all the phases of the main feeding line, controlled by a respective control relay, and a secondary electronic cutout circuit, with a low-tension supply shunted from the main circuit in a position downstream of said control relay and apt to cause the switching off of said relay, characterized in that it comprises furthermore at least one connection resistance, of high ohmic value, for connecting at least one phase of the main circuit to a first phase of the secondary circuit, creating a potential difference between said circuits, and in that the current flowing through said connection resistances is used - in the event of short circuit between a phase of the main circuit and the second phase of the secondary circuit - to pilot the secondary electronic cutout circuit and to cause the switching off of said control relay.

2) Device as in claim 1, comprising a connection resistance, of high ohmic value, for each of the phases of the main feeding line.

3) Device as in claim 1 or 2, furthermore comprising a rectifier and a voltage divider for connecting the mass of the apparatus to a phase of the secondary circuit, the signal picked up on the voltage divider being used to pilot the secondary cutout circuit.

4) Device as in claim 1 or 2, also comprising a connection capacitor, in correspondence of each connection resistance, for connecting at least one phase of the main feeding line with the second phase of the secondary circuit, said capacitor being charged by the current flowing through said connection resistance and its discharge current being used to pilot the secondary cutout circuit.

5) Device as in any one of the preceding claims, comprising moreover a decoupling capacitor on the input of the electronic cutout circuit.

6) Device as in any one of the preceding claims, apt to be used in association with an electric apparatus having a feeding line incorporating an earth conductor, characterized in that said switch of all the phases of the line further comprises a supplementary contact on the earth conductor, which is normally switched on and which is switched off upon energizing of the secondary electronic cutout circuit.

**FIG.1**

0043045

0043045

FIG.2

**FIG. 3**

0043045

## European Patent Office

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - A - 2 717 158 (CONSTRUCTIONS DE RELAIS ELECTRONIQUES) <br><br> * Page 15, line 25 to page 21, line 24; figures 1,2 * <br><br>-- <br><br> DE - A - 2 251 784 (W. BENDER) <br> * Page 9, line 14, to page 11, line 19, figure 1 * <br><br>-- | 1,2,4, 5 <br><br><br><br><br> 1,2,5 | H 02 H 3/17 |
| | FR - A - 1 338 421 (CHARBONNAGES DE FRANCE) <br><br> * Page 2, left-hand column, line 29 to page 3, left-hand column, line 13; figure 1 * <br><br>---- | 1,2,3 | **TECHNICAL FIELDS SEARCHED (Int. Cl.³)** <br><br> H 02 H 3/17 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family
corresponding document

The present search report has been drawn up for all claims

| Place of search | Date of completion of the search | Examiner |
|---|---|---|
| The Hague | 01-10-1981 | RUGGIU |

EPO Form 1503 1 06.78